# EUROPÄISCHE PATENTSCHRIFT

(11) **EP 1 503 222 B1**
(45) Veröffentlichungstag und Bekanntmachung des Hinweises auf die Patenterteilung: **08.09.2010**
(21) Anmeldenummer: 04017914.5
(22) Anmeldetag: 29.07.2004
(51) Int. Cl.: G06K 19/07

(54) **Verfahren zur Auswahl eines oder mehrerer Transponder**
Method for selecting one or more transponders
Méthode pour sélectionner un ou plusieurs répondeurs

(30) Priorität: 01.08.2003 DE 10336308
(43) Veröffentlichungstag der Anmeldung: 02.02.2005
(73) Patentinhaber: Atmel Automotive GmbH, 74072 Heilbronn (DE)
(72) Erfinder: Friedrich, Ulrich, Dipl.-Ing., 74248 Ellhofen (DE)
(74) Vertreter: Koch Müller Patentanwaltsgesellschaft mbH

(56) Entgegenhaltungen:
- DE-A1- 10 161 302
- US-A- 5 841 770
- US-A- 5 856 788
- US-B1- 6 377 203

## Beschreibung

Die Erfindung bezieht sich auf ein Verfahren zur Auswahl eines oder mehrerer Transponder aus einer Vielzahl von Transpondern durch eine Basisstation gemäß dem Oberbegriff des Anspruchs 1.

Derartige Auswahlverfahren, die auch als Antikollisionsverfahren bezeichnet werden, finden beispielsweise bei kontaktlosen Identifikationssystemen oder sogenannten Radio-Frequency-Identification(RFID)-Systemen Verwendung. Ein derartiges System besteht üblicherweise aus einer Basisstation bzw. einem Lesegerät und einer Vielzahl von Transpondern oder Remote-Sensoren, die sich gleichzeitig im Ansprechbereich der Basisstation befinden. Wenn die Datenübertragung nur zwischen einem bzw. einer Gruppe von Transpondern und der Basisstation erfolgen soll, muss vor der entsprechenden Datenübertragung ein solches Auswahlverfahren durchgeführt werden.

Ein Auswahlverfahren, bei dem die Transponder anhand eines bitweisen Vergleichs ihrer eindeutigen, statisch vergebenen Identifikationsbitfolge mit einer Auswahlbitfolge ausgewählt werden, ist in der US 5 856 788 beschrieben. Die Auswahl erfolgt hierbei in einem Halbduplex-Verfahren, bei dem die Transponder jeweils ein Bit ihrer Identifikations bitfolge übertragen und die Basisstation anschließend anhand der übermittelten Bitwerte ein Auswahlbit überträgt. Die Transponder vergleichen das entsprechende Bit ihrer Identifikationscode-Bitfolge mit dem zugehörigen Auswahlbit anhand eines Vergleichskriteriums. Das Vergleichskriterium ist in diesem Fall der Gleich-Operator, d.h. Transponder, deren entsprechendes Bit ihrer Identifikationscode-Bitfolge mit dem Auswahlbit übereinstimmt, bleiben aktiviert. Aufgrund des Halbduplex-Verfahrens wird relativ viel Zeit benötigt, bis ein Transponder ausgewählt ist.

In der ISO WD 18000-6 Mode 3 vom 01.02.2002 ist ein gattungsgemäßes Auswahlverfahren beschrieben, bei dem die Auswahl ebenfalls anhand einer eindeutigen Identifikationsbitfolge erfolgt. Das Auswahlverfahren arbeitet im Vollduplex-Verfahren, wodurch die Auswahldauer abnimmt. Die Transponder werden auch hier anhand ihrer eindeutigen, statisch vergebenen Identifikationsbitfolge ausgewählt.

In der US 5,841,770 ist ein Verfahren beschrieben, bei dem Transponder zunächst Zufallszahlen erzeugen und diese an eine Basisstation vollständig übertragen, worauf die Basisstation eine Auswahlbitfolge vollständig an die Transponder überträgt. Anschließend erfolgt anhand der vollständig übertragenen Auswahlbitfolge im Transponder ein Vergleich zum Ermitteln eines Selektionsbits.

Die genannten Verfahren setzen voraus, dass jedem Transponder im Ansprechbereich der Basisstation eine eindeutige Identifikationscode-Bitfolge zugeordnet ist. Die Identifikationsbitfolge wird üblicherweise durch eine sogenannte Unique-Identification(U-ID) gebildet, die den Transpondern beispielsweise bei ihrer Herstellung zugewiesen wird. Die Eindeutigkeit der U-ID kann jedoch aufgrund der Vielzahl von U-ID-Spezifikationen bei offenen Systemen nicht immer garantiert werden.

In der DE 101 61 302 A1 sind so genannte Tag-talks-first-basierte Transponder beschrieben, die unter anderem unaufgefordert eine Zufallszahl an eine Basisstation übertragen.

Der Erfindung liegt als technisches Problem die Bereitstellung eines Verfahrens der eingangs genannten Art zugrunde, welches zur Auswahl eines oder mehrerer Transponder aus einer Vielzahl von Transpondern durch eine Basisstation das Vorhandensein eines eindeutigen, statisch zugewiesenen Identifikationscodes in den Transpondern nicht zwingend voraussetzt und die Auswahl eines oder mehrerer Transponder auch bei mehrfach vergebenen, statisch zugewiesenen U-Ids ermöglicht.

Die Erfindung löst dieses Problem durch die Bereitstellung eines Verfahrens mit den Merkmalen des Anspruchs 1.

Erfindungsgemäß wird in dem jeweiligen Transponder eine Zufallszahlbitfolge erzeugt. Die Identifikationsbitfolge wird derart bereitgestellt, dass sie die Zufallszahlbitfolge enthält. Die Identifikationsbitfolge kann allein aus der Zufallszahlbitfolge bestehen oder weitere Anteile enthalten. Die Auswahl mit Hilfe der Zufallszahlbitfolge ermöglicht den Einsatz eines bitweisen Auswahlverfahrens auch bei offenen System, bei denen die in den Transpondern statisch enthaltenen Identifikationsbitfolgen mehrfach vorhanden sein können.

Der jeweilige Transponder überträgt vor dem bitweisen Vergleich zwischen den entsprechenden Bits seiner Identifikationsbitfolge und der Auswahlbitfolge den Wert des betreffenden Bits seiner Identifikationsbitfolge an die Basisstation. Dies verringert die Anzahl der benötigten Auswahlverfahrensschritte, bis alle gewünschten Transponder ausgewählt worden sind. Die Auswahlbitfolge wird durch die Basisstation in Abhängigkeit von der oder den von ihr empfangenen Identifikationsbitfolgen eingestellt. Dies ermöglicht die gezielte Auswahl der im Ansprechbereich der Basisstation vorhandenen Transponder.

Erfindungsgemäß wird das Vergleichskriterium durch die Basisstation an die Transponder übertragen. Dies vereinfacht die Auswahl bei veränderlichen Auswahlbedingungen.

In einer Weiterbildung des Verfahrens nach Anspruch 2 hängt das Vergleichskriterium von der Bitposition der zu vergleichenden Bits der Identifikationsbitfolge und der Auswahlbitfolge ab. Dies ermöglicht eine flexible Auswahl bei komplexen Auswahlbedingungen.

In einer Weiterbildung des Verfahrens nach Anspruch 3 ist das Vergleichskriterium ein arithmetischer Operator, insbesondere der Größer-Operator, der Kleiner-Operator oder der Gleich-Operator. Mit Hilfe arithmetischer Operatoren lassen sich in einfacher Weise Vergleichskriterien realisieren.

In einer Weiterbildung des Verfahrens nach Anspruch 4 enthält die identifikationsbitfolge einen statischen Bitfolgenanteil, der dem Transponder bei seiner Herstellung zugeordnet oder in ihn einprogrammiert wird. Der einprogrammierte Bitfolgenanteil kann beispielsweise in einem ROM oder eine EEPROM des Transponders abgelegt sein. Auf diese Weise können auch herstellerspezifische oder einprogrammierte Datenstrukturen in das Auswahlverfahren mit einbezogen werden. Aufgrund des erfindungsgemäßen Verfahrens ist die eindeutige Auswahl der Transponder selbst dann möglich, wenn deren statisch vergebene Identifikationsbitfolge bzw. Bitfolgenanteil übereinstimmt. Weiterhin ermöglicht es die Migration herkömmlicher, statischer Identifikationsbitfolgen, wie sie in geschlossenen Systemen vorkommen, in offene Systeme

In einer Weiterbildung des Verfahrens nach Anspruch 5 wird der Auswahlvorgang wiederholt durchgeführt, wobei diejenigen Transponder, die in dem jeweils zuvor durchgeführten Auswahlvorgang ausgewählt wurden, nicht mehr an den nachfolgenden Auswahlvorgängen teilnehmen. Dies ermöglicht die sequentielle Auswahl einzelner oder Gruppen von Transpondern. Vorteilhaft erzeugen gemäß Anspruch 6 diejenigen Transponder, die noch an den Auswahlvorgängen teilnehmen, eine neue Zufallszahlbitfolge und die Identifikationsbitfolge enthält die neue Zufallszahlbitfolge. Dies verringert für die verbleibenden Transponder noch weiter die Wahrscheinlichkeit, dass ihre Zufallszahlbitfolgen bzw. Identifikationsbitfolgen identisch sind.

Vorteilhafte Ausführungsformen der Erfindung sind in den Zeichnungen dargestellt und werden nachfolgend beschrieben. Hierbei zeigen schematisch:
- Fig. 1: ein RFID-System mit einer Basisstation und zwei Transpon- dern,
- Fig. 2: eine Auswahlbitfolge und eine zugehörige Identifikationsbitfolge mit einem Zufallszahlbitfolgen-Bereich und einem statischen Bitfolgen- Bereich,
- Fig. 3: ein Diagramm der zeitlichen Abfolge einer ersten von der Basissta- tion übertragenen Auswahlbitfolge zur Auswahl eines ersten Transponders und der zugehörigen Informationsbitfolgen, die von den in Fig. 1 gezeigten Transpondern an die Basisstation übertra- gen werden, und
- Fig. 4: ein Diagramm der zeitlichen Abfolge einer zweiten von der Basissta- tion übertragenen Auswahlbitfolge zur Auswahl eines zweiten Transponders und der zugehörigen Informationsbitfolgen, die von den in Fig. 1 gezeigten Transpondern an die Basisstation übertra- gen werden.

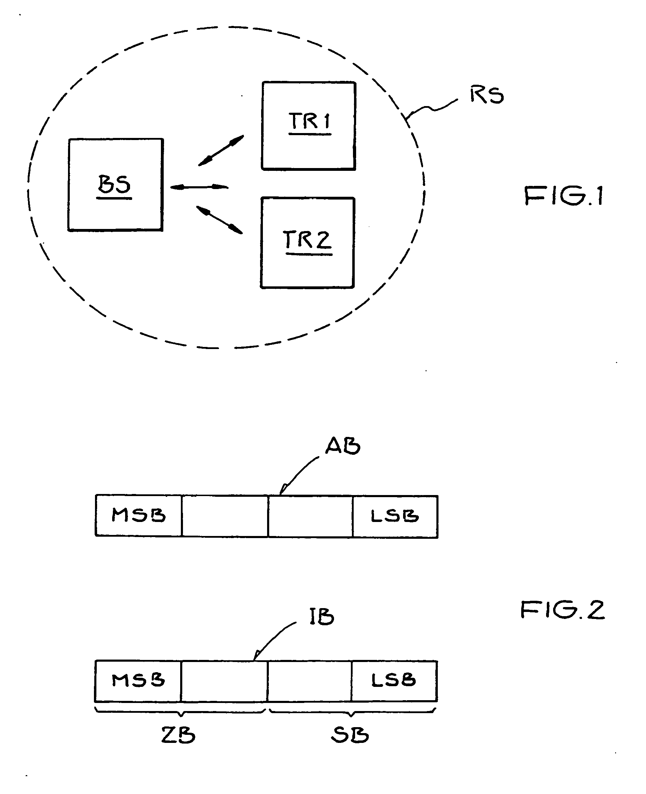

Fig. 1 zeigt ein RFID-System RS mit einer Basisstation BS und zwei Transpondern TR1 und TR2, wie sie beispielsweise in Lagerhaltungs-Anwendungen vorkommen. Zur Datenübertragung emittiert die Basisstation elektromagnetische Trägerwellen, die sie entsprechend den zu übertragenden Informationen moduliert. Zur Datenübertragung von den Transpondern TR1 und TR2 zur Basisstation BS modulieren die Transponder TR1 und TR2 die von ihnen empfangenen Trägerwellen durch Änderung ihrer Eingangsimpedanz.

Bei derartigen Lagerhaltungs-Anwendungen kann es sich um ein offenes System handeln, d.h. es können sich beliebige Transponder im Ansprechbereich der Basisstation BS befinden, deren statische Identifikationsbitfolge, beispielsweise die bei ihrer Herstellung vergebene U-ID, identisch sein kann. In einem Anfangszustand des RFID-Systems sind der Basisstation BS weder die Anzahl der vorhandenen Transponder TR1 und TR2 in ihrem Ansprechbereich, noch die statischen Identifikationsbitfolgen bekannt, die den Transpondern TR1 und TR2 bei ihrer Herstellung zugeordnet wurden.

Zur Datenübertragung mit den Transpondern TR1 und TR2 muss die Basisstation BS die Anwesenheit der Transponder TR1 und TR2 in ihrem Ansprechbereich feststellen und anschließend mit Hilfe eines Auswahlverfahrens einen der Transponder TR1 bzw. TR2 auswählen. Nach einer erfolgten Auswahl kann die Basisstation BS Schreib- oder Leseoperationen mit dem ausgewählten Transponder TR1 oder TR2 durchführen.

Fig. 2 zeigt eine Auswahlbitfolge AB und eine zugehörige Identifikationsbitfolge IB mit einem Zufallszahlbitfolgen-Bereich ZB und einem statischen Bitfolgen-Bereich SB, die zur Auswahl eines Transponders TR1 bzw. TR2 verwendet werden. Das höchstwertige Bit MSB der jeweiligen Bitfolge AB bzw. IB steht links, das niederwertigste Bit LSB rechts. Der Zufallszahlbitfolgen-Bereich ZB wird in den Transpondern TR1 und TR2 jeweils mit einer Zufallszahlbitfolge ausgefüllt, die durch einen nicht gezeigten Zufallszahlengenerator, beispielsweise ein lineares, rückgekoppeltes Schieberegister, erzeugt wird. In diesem Ausführungsbeispiel sei angenommen, dass die Transponder identische Werte in ihrem jeweiligen statischen Bitfolgen-Bereich SB aufweisen. Mit dem eingangs erwähnten, herkömmlichen bitweisen Auswahlverfahren wären die Transponder TR1 und TR2 somit nicht getrennt ansprechbar.

Zur Auswahl eines der Transponders TR1 bzw. TR2 überträgt die Basisstation BS einen Startbefehl, der den Auswahlvorgang einleitet. Zu diesem Zeitpunkt wird die am jeweiligen Zufallszahlengenerator anstehende Zufallszahl bzw. Zufallszahlenbitfolge in den jeweiligen Zufallszahlbitfolgen-Bereich ZB der Transponder TR1 und TR2 eingetragen.

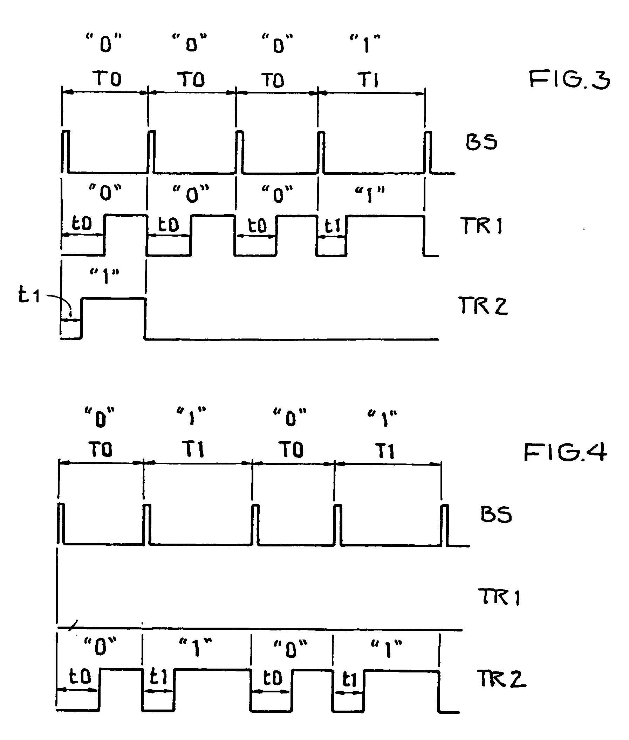

Fig. 3 zeigt, wie die Transponder TR1 und TR2 anschließend gleichzeitig jewells den Wert ihres höchstwertigen Bits aus ihrem Zufallszahlbitfolgen-Bereich ZB an die Basisstation übertragen. TR1 überträgt den Wert 0 und TR2 den Wert 1.

. Die Kodierung der jeweiligen Werte durch die Transponder TR1 und TR2 erfolgt durch eine dem Wert zugeordnete Zeitdauer t0 bzw. t1 eines Rückstreusignals bis zu einem Modulationswechsel bezogen auf eine von der Basisstation BS ausgesendete Synchronisationsmarke, die beispielsweise durch einen Modulationswechsel des von der Basisstation BS ausgesendeten Trägersignals erzeugt werden kann.

Die Basisstation BS empfängt die rückgestreuten Signale und kann aufgrund der Kodierung erkennen, welche Werte gesendet wurden und ob unterschiedliche Werte vorliegen. Die Basisstation BS sendet anhand der empfangenen Werte ein erstes Auswahlbit mit dem Wert 0 an die Transponder TR 1 und TR2. Die Kodierung des Wertes des Auswahlbits erfolgt über die Zeitdauer zwischen zwei Synchronisationsmarken. Einer Zeitdauer T0 ist der Wert 0 und eine Zeitdauer T1 der Wert 1 zugeordnet.

In den Transpondern TR1 und TR2 findet nun ein Vergleich zwischen dem ersten Auswahlbit und dem jeweiligen höchstwertigen Bit aus ihrem Zufallszahlbitfolgen-Bereich ZB anhand eines Vergleichskriteriums statt. Das Vergleichskriterium, das im Kontext des Startbefehls übertragen wurde, ist hierbei ein Gleich-Operator.

Da die Werte des Auswahlbits und des zugehörigen Bits der Zufallszahlenbitfolge des ersten Transponders TR1 gleich sind, wird sein Selektionsbit auf den Wert "selektiert" gesetzt, d.h. er nimmt weiter am Auswahlverfahren teil. Da sich die entsprechenden Werte des zweiten Transponders TR2 unterscheiden, wird sein Selektionsbit auf den Wert "nicht selektiert" gesetzt, wodurch er in einen sogenannten Stillhalte-Betriebszustand wechselt und nicht mehr am aktuellen Auswahlvorgang teilnimmt. Der Vergleich wird nun bitweise für alle Bits der Identifikationsbitfolge IB des ersten Transponders TR1 entsprechend durchgeführt. Da im gezeigten Beispiel jeweils eine Übereinstimmung des Auswahlbits mit dem zugehörigen Bit der Identifikationsbitfolge IB vorliegt, wird bzw. bleibt der erste Transponder TR1 ausgewählt. Die Basisstation BS kann nun eine Schreib- und/oder Leseoperation mit ihm durchführen.

Fig. 4 zeigt eine sich anschließende Auswahl des zweiten Transponders TR2 durch eine Wiederholung des Auswahlvorgangs. Die Basisstation BS überträgt zur Initiierung des wiederholten Auswahlvorgangs erneut einen Startbefehl, der den zweiten Auswahlvorgang einleitet. Aufgrund des Startbefehls erzeugt der zweite Transponder TR2 eine neue Zufallszahlbitfolge ZB. Da der erste Transponder TR1 bereits im ersten Auswahlverfahren ausgewählt wurde, wechselt er in den Stillhalte-Betriebszustand und nimmt an dem in Fig. 4 gezeigten Auswahlvorgang nicht mehr Teil. Der zweite Transponder TR2 überträgt nun bitweise seine Identifikationsbitfolge, worauf die Basisstation ein jeweils gleichwertiges Auswahlbit an den Transponder überträgt. Das Selektionsbit des zweiten Transponders weist folglich nach der Übertragung aller Identifikationsbits den Wert "ausgewählt" auf, und die Basisstation BS kann nun eine Schreib- und/oder Leseoperation mit ihm durchführen.

## Patentansprüche

1. Verfahren zur Auswahl eines oder mehrerer Transponder aus einer Vielzahl von Transpondern (TR1, TR2) durch eine Basisstation (BS), bei dem für einen jeweiligen Auswahlvorgang
- in den Transpondern (TR1, TR2) jeweils eine Identifikationsbitfolge (IB) bereitgestellt wird, wobei in dem jeweiligen Transponder (TR1, TR2) eine Zufallszahlbitfolge (ZB) erzeugt wird und als Identifikationsbitfolge (IB) eine solche bereitgestellt wird, welche die Zufallszahlbitfolge (ZB) enthält,
- durch die Basisstation (BS) eine Auswahlbitfolge (AB) bitweise an die Transponder (TR1, TR2) übertragen wird,
**dadurch gekennzeichnet, dass**
ein Vergleichskriterium durch die Basisstation (BS) an die Transponder (TR1, TR2) übertragen wird,
- der jeweilige Transponder (TR1, TR2) vor dem bitweisen Vergleich zwischen den entsprechenden Bits seiner Identifikationsbitfolge (IB) und der Auswahlbitfolge (AB) den Wert des betreffenden Bits seiner Identifikationsbitfolge (IB) an die Basisstation überträgt und
- die Auswahlbitfolge (AB) durch die Basisstation (BS) in Abhängigkeit von der oder den von ihr empfangenen Identifikationsbitfolgen eingestellt wird,
in dem jeweiligen Transponder (TR1, TR2) während der Übertragung der Identifikationsbitfolge (IB) an die Basisstation (BS) ein bitweiser Vergleich zwischen den entsprechenden Bits der Identifikationsbitfolge (IB) und der Auswahlbitfolge (AB) anhand eines vorgebbaren Vergleichskriteriums durchgeführt wird und anhand des Vergleichsergebnisses einem Selektionsbit ein Wert zugewiesen wird, und
- der jeweilige Transponder (TR1, TR2) abhängig von dem Wert seines Selektionsbits ausgewählt wird.

2. Verfahren nach Anspruch 1, **dadurch gekennzeichnet, dass** das Vergleichskriterium von der Bitposition der zu vergleichenden Bits der Identifikationsbitfolge (IB) und der Auswahlbitfolge (AB) abhängt.

3. Verfahren nach Anspruch 1 oder Anspruch 2, **dadurch gekennzeichnet, dass** das Vergleichskriterium ein arithmetischer Operator, insbesondere der Größer-Operator, der Kleiner-Operator oder der Gleich-Operator, ist.

4. Verfahren nach einem der vorhergehenden Ansprüche, **dadurch gekennzeichnet, dass** die Identifikationsbitfolge (IB) einen statischen Bitfolgenanteil enthält, der dem Transponder (TR1, TR2) bei seiner Herstellung zugeord net wird.

5. Verfahren nach einem der vorhergehenden Ansprüche, **dadurch gekennzeichnet, dass** der Auswahlvorgang wiederholt durchgeführt wird, wobei diejenigen Transponder (TR1), die in dem jeweils zuvor durchgeführten Auswahlvorgang ausgewählt wurden, nicht mehr an dem oder den nachfolgenden Auswahlvorgängen teilnehmen.

6. Verfahren nach Anspruch 5, **dadurch gekennzeichnet, dass** diejenigen Transponder (TR2), die noch an dem oder den Auswahlvorgängen teilnehmen, eine neue Zufallszahlbitfolge (ZB) erzeugen und die Identifikationsbitfolge (IB) die neue Zufallszahlbitfolge (ZB) enthält.

## Claims

1. Method of selecting one or more transponders from a plurality of transponders (TR1, TR2) by a base station (BS), in which for a respective selection process:
- a respective identification bit sequence (IB) is provided in the transponders (TR1, TR2), wherein a random number bit sequence (ZB) is generated in the respective transponder (TR1, TR2) and as identification bit sequence (IB) there is provided one such which includes the random number bit sequence (ZB),
- a selected bit sequence (AB) is transmitted bit-by-bit by the base station (BS) to the transponders (TR1, TR2),
**characterised in that**
- a comparison criterion is transmitted by the base station (BS) to the transponders (TR1, TR2),
- the respective transponder (TR1, TR2) transmits to the base station, prior to the bit-by-bit comparison between the corresponding bits of its identification bit sequence (IB) and the selected bit sequence (AB), the value of the relevant bits of its identification bit sequence (IB) and
- the selected bit sequence (AB) is set by the base station (BS) in dependence on the identification bit sequence or sequences received by it,
- a bit-by-bit comparison between the corresponding bits of the identification bit sequence (IB) and the selected bit sequence (AB) is carried out on the basis of a predeterminable comparison criterion during transmission of the identification bit sequence (IB) to the base station (BS) and a value is assigned to a selection bit on the basis of the comparison result and
- the respective transponder (TR1, TR2) is selected in dependence on the value of its selection bit.

2. Method according to claim 1, **characterised in that** the comparison criterion depends on the bit position of the bits, which are to be compared, of the identification bit sequence (IB) and the selected bit sequence (AB).

3. Method according to claim 1 or claim 2, **characterised in that** the comparison criterion is an arithmetic operator, particularly the greater operator, the smaller operator or the equal operator.

4. Method according to any one of the preceding claims, **characterised in that** the identification bit sequence (IB) contains a statistical bit sequence component which is assigned to the transponder (TR1, TR2) during production thereof.

5. Method according to any one of the preceding claims, **characterised in that** the selection process is repeatedly performed, wherein those transponders (TR1) which were selected in the respective selection process carried out beforehand no longer participate in the succeeding selection process or processes.

6. Method according to claim 5, **characterised in that** those transponders (TR2) which still participate in the selection process or processes generate a new random number bit sequence (ZB) and the identification bit sequence (IB) contains the new random number bit sequence (ZB).

## Revendications

1. Procédé pour la sélection d'un ou de plusieurs transpondeur(s) parmi une pluralité de transpondeurs (TR1,TR2) à travers une station de base (BS) dans lequel pour chaque étape de sélection
. on délivre à chaque fois dans les transpondeurs (TR1, TR2) une suite binaire d'identification (IB) et selon lequel dans chaque transpondeur on génère une suite binaire de nombres aléatoires (ZB) et on l'établit en tant que suite binaire d'identification (IB) qui contient la suite binaire de nombres aléatoires (ZB)
. on transmet de façon binaire à travers la station de base (BS) aux transpondeurs (TR1, TR2) une suite binaire de sélection (AB)
**caractérisé en ce que** :
. on transmet au transpondeur (TR1, TR2) un critère de comparaison à travers la station de base,
. chaque transpondeur (TR1, TR2) avant la comparaison binaire entre les bits correspondant à la suite binaire d'identification (IB) et la suite binaire de sélection (AB) transmet la valeur des bits concernant sa suite binaire d'identification (IB) à la station de base,
. on règle la suite binaire de sélection binaire (AB) à travers la station de base (BS) en fonction de la ou des suites binaires d'identification reçues, pendant la transmission de la suite binaire d'identification (IB) à la station de base (BS) on effectue dans chaque transpondeur (TR1, TR2) une comparaison binaire entre les bits correspondant de la suite binaire d'identification (IB) et la suite binaire de sélection (AB) au moyen d'un critère prédéterminé de comparaison et au moyen d'un résultat de comparaison on attribue une valeur à un bit de sélection,
. on sélectionne chaque transpondeur (TR1, TR2) en fonction de la valeur de son bit de sélection.

2. Procédé selon la revendication 1 **caractérisé en ce que** le critère de comparaison dépend de la position de bit des bits à comparer de la suite d'identification (IB) et de la suite binaire de sélection (AB).

3. Procédé selon la revendication 1 ou 2 **caractérisé en ce que** le critère de sélection est un opérateur arithmétique en particulier l'opérateur supérieur à, l'opérateur inférieur à ou l'opérateur égal à.

4. Procédé selon l'une quelconque des revendications précédentes **caractérisé en ce que** la suite binaire d'identification (IB) contient une composante statique de suite binaire qui est associée au transpondeur (TR1, TR2) lors de sa fabrication.

5. Procédé selon l'une quelconque des revendications précédentes **caractérisé en ce que** l'on procède à nouveau à l'étape de sélection, les transpondeurs (TR1) ayant été sélectionnés lors de chaque déroulement précédent de l'étape de sélection, ne faisant plus partie des étapes de sélection ultérieures.

6. Procédé selon la revendication 5 **caractérisé en ce que** pour les transpondeurs (TR2) faisant encore partie de la ou des étapes de sélection, on génère une nouvelle suite binaire de nombres aléatoires (ZB) et **en ce que** la suite binaire d'identification contient la nouvelle suite binaire de nombres aléatoires (ZB).
